# EUROPÄISCHE PATENTANMELDUNG

(11) **EP 2 228 890 A1**
(43) Veröffentlichungstag der Anmeldung: **15.09.2010**
(21) Anmeldenummer: 09003398.6
(22) Anmeldetag: 09.03.2009
(51) Int. Cl.: H02K 3/30, H02K 3/40, H02K 3/44, H01B 17/50, B08B 17/02

(54) **Elektrodynamische Maschine**

(71) Anmelder: Siemens Aktiengesellschaft, 80333 München (DE)
(72) Erfinder: Kowalski, Waldemar, 45472 Mülheim an der Ruhr (DE); Lehmann, Christoph, Dr., 47506 Neukirchen-Vluyn (DE)

(57) **Zusammenfassung**

Die Erfindung betrifft eine elektrodynamische Maschine, die insbesondere als ein elektrischer Generator ausgebildet sein kann und mehrere Leiterstäbe (1, 2) umfasst, über die ein vergleichsweise hoher elektrischer Strom fließt, wobei die Oberfläche des Leiterstabes (1, 2) mit einer unbenetzbaren Oberflächenstruktur ausgebildet ist zur Verkürzung des Kriechweges.

## Beschreibung

Die Erfindung betrifft eine elektrodynamische Maschine, umfassend einen Rotor und einen Stator, wobei der Stator einen Leiterstab zum Leiten von elektrischem Strom umfasst. Des Weiteren betrifft die Erfindung ein Verfahren zur Verminderung der Kriechstrecke zwischen zwei elektrischen Leiterstäben.

Bei elektrischen Generatoren als Ausführungsform einer elektrodynamischen Maschine wird zwischen Gleichstromgeneratoren und Wechselstromgeneratoren unterschieden. Ein Gleichstromgenerator zeichnet sich dadurch aus, dass bei diesem ein feststehender Stator mit einer stromdurchflossenen Erregerwicklung ausgebildet ist. Solch eine Erregerwicklung erzeugt ein statisches magnetisches Feld im Bereich einer innerhalb des Stators angeordneten Rotorwelle, welche eine zur Erregerwicklung parallel geschaltete sogenannte Ankerwicklung aufweist. Durch die Drehung der Rotorwelle wird im Anker ein elektrischer Strom erzeugt, der über einen an der Rotorwelle befestigten Schleifring mittels eines Schleifkontaktes, wie etwa einer Kohlebürste abgegriffen wird.

Hingegen weist ein Wechselstromgenerator einen Stator mit einer sogenannten Statorwicklung auf, die in der Regel in drei Wicklungssträngen ausgeführt ist. Der um eine Rotorwelle drehbar gelagerte Rotor ist innerhalb des Stators angeordnet und weist eine Erregerwicklung auf. An den Rotorwellenenden sind jeweils Schleifringe angeordnet, über die im Betrieb ein schleifender Schleifkontakt über Kohlebürsten hergestellt wird. Dadurch wird der Erregerwicklung von außen ein Strom zugeführt. Die Erregerwicklung erzeugt dabei ein magnetisches Erregerfeld im Bereich der sie umgebenden Statorwicklung. Bei einer Drehung des Rotors um die Rotorwelle wird nun durch das sich dabei mitdrehende, von der Erregerwicklung erzeugte Magnetfeld ein Wechselstrom in die Spulenwicklung des Stators induziert.

Der Stator weist Nuten auf, in die die Leiterstäbe angeordnet werden, die aus einem hochleitfähigen Material ausgebildet sind. Über die Leiterstäbe fließt in der Regel ein vergleichsweise hoher Strom. Daher werden die Leiterstäbe entsprechend isoliert, damit ein Spannungsüberschlag zwischen zwei benachbarten Leiterstäben vermieden ist. Dabei gilt, dass die Wahrscheinlichkeit für einen Spannungsüberschlag geringer wird, je größer der Abstand zwischen den Leiterstäben ist. Das bedeutet, dass ein Generator kompakter ausgebildet werden könnte, wenn der Abstand zwischen den Leiterstäben verringert ist. Dazu müssten geeignete Vorkehrungen getroffen werden, um die Wahrscheinlichkeit von Spannungsüberschlägen zu vermeiden.

Die Erfindung beschäftigt sich mit diesem Problem und es ist daher Aufgabe der Erfindung, eine elektrodynamische Maschine anzubieten, deren Leiterstäbe eine geringere Neigung zu Spannungsüberschlägen zeigt.

Die Aufgabe wird gelöst durch eine elektrodynamische Maschine, umfassend einen Rotor und einen Stator, wobei der Stator einen Leiterstab zum Leiten von elektrischem Strom umfasst, wobei die Oberfläche des Leiterstabs mit einer Beschichtung versehen ist, die eine unbenetzbare Oberflächenstruktur aufweist. Des Weiteren wird die Aufgabe durch ein Verfahren zur Verminderung der Kriechstrecke zwischen zwei elektrischen Leiterstäben gelöst, wobei die Oberfläche des Leiterstabs mit einer Beschichtung, die eine unbenetzbare Oberflächenstruktur aufweist, beschichtet wird.

Die Erfindung geht davon aus, dass sich ein auf dem Leiterstab gesammelter Schmutz negativ auswirkt. Das bedeutet, dass ein Spannungsüberschlag zwischen zwei Leiterstäben begünstigt wird durch Schmutzpartikel, die sich auf dem Leiterstab sammeln. Daher wird erfindungsgemäß der auf dem Leiterstab sich ansammelnde Schmutz durch eine unbenetzbare Oberflächenstruktur beseitigt. Unbenetzbare Oberflächenstrukturen haben die Eigenschaft, dass sich abgelagerte Schmutzpartikel nicht auf der Oberfläche halten können. Das bedeutet, dass mit einer unbenetzbaren Oberflächenstruktur ausgebildete Leiterstäbe vergleichsweise sauber sind, d. h. dass sich weniger Schmutzpartikel auf der Oberfläche befinden. Die zwischen zwei Leiterstäben befindlichen Schmutzpartikel können bei den vergleichsweise hohen elektrischen Spannungen dazu führen, dass Spannungsüberschläge entstehen. Wird von vorneherein die Lagerung von Schmutzpartikeln auf der Leiterstaboberfläche vermieden, ist dadurch zwangsweise die Gefahr von Spannungsüberschlägen verringert.

Solche Beschichtungen, die einen selbstreinigenden Effekt zeigen, werden auch als Lotus-Schichten bezeichnet. Bekannt ist der Lotus-Effekt, bei dem die Haftung der Schmutzpartikel auf der Oberfläche verhindert ist. Die Oberflächenstruktur erhält diese Eigenschaft durch das Vorsehen mikroskopischer Unebenheiten auf der Oberfläche. Diese mikroskopischen Unebenheiten auf der Oberfläche verringern die Kontaktfläche eines Schmutzpartikels mit der Oberfläche. Die Haftung von Schmutzpartikeln an der Leiterstaboberfläche ist damit stark verringert, was dazu führt, dass die Schmutzpartikel durch Eigenschwingungen, Luft- bzw. Gasströme bzw. auch die bei Drehung der Rotorwelle auftretenden Zentrifugalkräfte sich lösen. Eine Ablagerung von Schmutzpartikeln und allgemein einer Verschmutzung des Leiterstabs wird dadurch weitgehend vermindert.

Bei noch notwendigen Wartungsvorgängen kann auf eine aufwändige Reinigung verzichtet werden.

Die Gefahr von Spannungsüberschlägen ist reduziert, was dazu führt, dass die Leiterstäbe einen geringeren Kriechweg aufweisen, der dazu genutzt werden kann, die Leiterstäbe kompakter, d. h. enger aneinander anzuordnen.

Eine unbenetzbare Oberflächenstruktur kann beispielsweise unter Ausnutzung des so genannten "Lotus-Effektes" 11 realisiert werden. Während die bekannten Ausgestaltungen der Oberfläche des Leiterstabes eine möglichst glatte, strukturlose Oberfläche vorschlägt, wird erfindungsgemäß eine gezielte Strukturierung der Leiterstaboberfläche vorgeschlagen.

Vorteilhafte Weiterbildungen sind in den Unteransprüchen angegeben.

So ist es vorteilhaft, dass die unbenetzbare Oberflächenstruktur Mikrokristalle umfasst. Es kommen dabei beispielsweise Mikrokristallstrukturen bzw. Mikrokristallite in der Größe von typischerweise wenigen Mikrometern zur Anwendung. Als Beschichtungsmaterial können, wie aus den biologischen Systemen bekannt ist, so genannte epikutikulare Wachskristalle Anwendung finden. Zu den epikutikularen Wachskristallen können aber auch dazu äquivalente Kristallsysteme zum Einsatz kommen.

In einer vorteilhaften Weiterbildung weist der Leiterstab eine Isolierschicht auf, die zum elektrischen Isolieren ausgebildet ist, wobei die Beschichtung, die die unbenetzbare Oberflächenstruktur aufweist, auf der Isolierschicht aufgebracht ist.

Die auf das Verfahren hin gerichtete Aufgabe wird gelöst durch ein Verfahren zur Verminderung der Kriechstrecke zwischen zwei elektrischen Leiterstäben, wobei die Oberfläche des Leiterstabes mit einer Beschichtung, die eine unbenetzbare Oberflächenstruktur aufweist, beschichtet wird.

Ein Ausführungsbeispiel der Erfindung wird anhand einer Zeichnung näher erläutert. Darin zeigt:

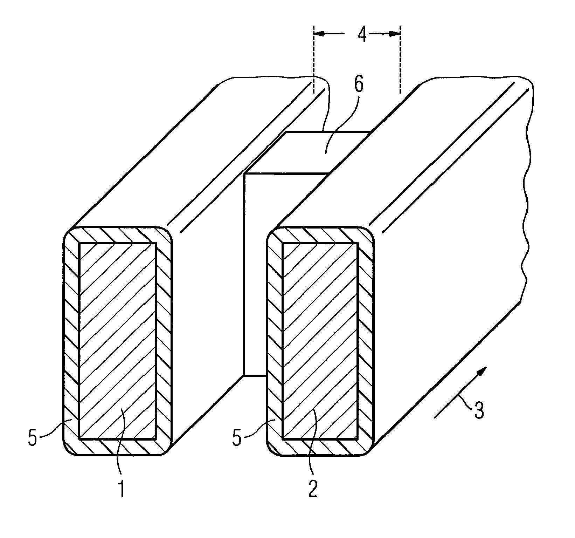

Figur 1 einen Ausschnitt einer elektrodynamischen Maschine.

Die Figur 1 zeigt einen Leiterstab 1 und einen zweiten Leiterstab 2. Solche Leiterstäbe 1, 2 werden in Generatoren als Ausführungsform einer elektrodynamischen Maschine eingesetzt. Diese Leiterstäbe 1, 2 können auch in elektrischen Motoren eingesetzt werden. Die elektrische Leitfähigkeit der Leiterstäbe 1, 2 ist besonders hoch, da in der Regel Kupfer als Material verwendet wird. Die Leiterstäbe 1, 2 werden in einer länglichen Richtung 3 ausgebildet und können mehrere Meter lang sein. In so genannte Nuten werden diese Leiterstäbe 1, 2 angeordnet. In der Figur wurde auf die Darstellung der Nuten verzichtet. Im Betrieb strömt durch den Leiterstab 1, 2 ein elektrischer Strom mit einer Stromstärke von mehreren Ampere. Die dabei abfallenden Spannungen sind vergleichsweise hoch, so dass Spannungsüberschläge zwischen dem ersten Leiterstab 1 und dem zweiten Leiterstab 2 möglich sind. Um Spannungsüberschläge zu vermeiden wird der erste Leiterstab 1 und der zweite Leiterstab 2 in einem geeigneten Abstand 4 zueinander angeordnet. Um weiterhin die Gefahr von Spannungsüberschlägen zu vermindern, ist eine schützende Beschichtung 5 auf der Oberfläche des ersten Leiterstabes 1 und des zweiten Leiterstabes 2 angeordnet.

Die Beschichtung weist eine unbenetzbare Oberflächenstruktur auf. Das bedeutet, dass sich Schmutzpartikel auf der Beschichtung 5 nicht sammeln können und daher die Gefahr von Spannungsüberschlägen minimiert wird. Solche Beschichtungen 5 werden auch als Lotus-Schichten bezeichnet und zeichnen sich dadurch aus, dass sie eine extrem aufgeraute, hydrophobe Oberfläche aufweisen, an denen Wasser und Partikel, insbesondere Schmutzpartikel, praktisch nicht haften.

Zum Einsatz für eine unbenetzbare Oberflächenstruktur kommt beispielsweise ein Mikrokristall in Frage bzw. eine Mikrokristallstruktur. In einer ersten Ausführungsform wird als Beschichtung 5 ein epikutikulares Wachskristall verwendet, das eine hervorragende Eigenschaft bezüglich des Lotus-Effektes zeigt.

Zwischen dem ersten Leiterstab 1 und dem zweiten Leiterstab 2 ist ein Distanzelement 6 angeordnet. Mit Hilfe dieses Distanzelementes 6 wird gewährleistet, dass der Abstand 4 zwischen dem ersten Leiterstab 1 und dem zweiten Leiterstab 2 exakt eingehalten wird. Durch die Verwendung einer einen Lotus-Effekt zeigenden Beschichtung 5 kann der Abstand 4 verkürzt werden, da der Kriechweg verkürzt ist. Das bedeutet, das eine elektrodynamische Maschine mit einer Lotus-Schicht auf dem Leiterstab 1, 2 kompakter ausgebildet werden kann. Somit können reduzierte elektrische Abstände zwischen dem ersten Leiterstab 1 und dem zweiten Leiterstab 2 realisiert werden.

Die elektrodynamische Maschine umfasst einen nicht näher dargestellten Rotor und einen Stator, wobei sowohl im Stator als auch im Rotor die Leiterstäbe 1, 2 angeordnet werden. Die Leiterstäbe 1, 2 sind insbesondere zum Leiten von elektrischem Strom ausgebildet. Im Betrieb rotiert der Rotor mit einer Umdrehungsfrequenz von z. B. 50 Hz bzw. 60 Hz in der Regel um eine Rotationsachse, die nicht näher dargestellt ist.

Eine weitere Möglichkeit den Kriechweg noch weiter zu verkürzen, d. h. Spannungsüberschläge zu vermeiden, besteht darin, die Leiterstäbe 1 ,2 mit einer elektrischen Isolierschicht auszubilden. Auf diese elektrische Isolierschicht, die in der Figur nicht näher dargestellt ist, wird die unbenetzbare Oberflächenstruktur, die den Lotus-Effekt aufweist, aufgetragen.

## Patentansprüche

1. Elektrodynamische Maschine,
umfassend einen Rotor und einen Stator,
wobei der Stator einen Leiterstab (1) zum Leiten von elektrischem Strom umfasst,
**dadurch gekennzeichnet, dass**
die Oberfläche des Leiterstabs (1) mit einer Beschichtung (5) versehen ist, die eine unbenetzbare Oberflächenstruktur aufweist.

2. Elektrodynamische Maschine nach Anspruch 1,
wobei die unbenetzbare Oberflächenstruktur Mikrokristalle umfasst.

3. Elektrodynamische Maschine nach Anspruch 1 oder 2,
wobei die Beschichtung aus epikutikularen Wachskristallen ausgebildet ist.

4. Elektrodynamische Maschine nach einem der vorhergehenden Ansprüche,
wobei ein zweiter Leiterstab (2) in einem Abstand (4) zum Leiterstab (1) angeordnet ist,
wobei der zweite Leiterstab (2) mit einer Beschichtung (5) versehen ist, die eine unbenetzbare Oberflächenstruktur aufweist.

5. Elektrodynamische Maschine nach einem der vorhergehenden Ansprüche,
wobei der Leiterstab (1) eine Isolierschicht zum elektrischen Isolieren aufweist und die Beschichtung (5), die die unbenetzbare Oberflächenstruktur aufweist, auf der Isolierschicht aufgebracht ist.

6. Verfahren zur Verminderung der Kriechstrecke zwischen zwei elektrischen Leiterstäben (1, 2),
**dadurch gekennzeichnet, dass**
die Oberfläche des Leiterstabs (1, 2) mit einer Beschichtung (5), die eine unbenetzbare Oberflächenstruktur aufweist, beschichtet wird.

7. Verfahren nach Anspruch 6,
wobei die Beschichtung (5) auf einer Isolierschicht aufgebracht wird.

8. Verfahren nach Anspruch 6 oder 7,
wobei eine epikutikulare Wachskristallschicht aufgetragen wird.
